(19) Europäisches Patentamt
European Patent Office
Office européen des brevets

(11) EP 3 812 411 B1

(12) EUROPEAN PATENT SPECIFICATION

(45) Date of publication and mention of the grant of the patent:
**09.08.2023 Bulletin 2023/32**

(21) Application number: **20202945.0**

(22) Date of filing: **21.10.2020**

(51) International Patent Classification (IPC):
***C08G 18/79*** *(2006.01)*

(52) Cooperative Patent Classification (CPC):
**C08G 18/706; C08G 18/0819; C08G 18/0828; C08G 18/2835; C08G 18/61; C08G 18/6229; C08G 18/792; C08G 18/8064; C09D 175/04**

(54) **POLYISOCYANATE COMPOSITION, COATING COMPOSITION AND COATED SUBSTRATE**

POLYISOCYANATZUSAMMENSETZUNG, BESCHICHTUNGSZUSAMMENSETZUNG UND BESCHICHTETES SUBSTRAT

COMPOSITION DE POLYISOCYANATE, COMPOSITION DE REVÊTEMENT ET SUBSTRAT REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2019 JP 2019193781**
**19.10.2020 JP 2020175421**

(43) Date of publication of application:
**28.04.2021 Bulletin 2021/17**

(73) Proprietor: **Asahi Kasei Kabushiki Kaisha**
**Tokyo 1000006 (JP)**

(72) Inventors:
- **LI, Guan**
  **Tokyo, 100-0006 (JP)**
- **YAMAUCHI, Masakazu**
  **Tokyo, 100-0006 (JP)**

(74) Representative: **Strehl Schübel-Hopf & Partner**
**Maximilianstrasse 54**
**80538 München (DE)**

(56) References cited:
**EP-A1- 0 953 585**
**WO-A1-2010/112605**
**WO-A1-2015/051526**
**WO-A1-2016/101093**
**WO-A1-2017/082363**
**WO-A1-2017/185332**
**WO-A1-2019/121387**
**WO-A1-2020/226962**
**JP-A- 2000 198 920**
**JP-B2- 5 557 975**
**US-A1- 2003 138 642**
**US-A1- 2014 327 959**
**US-A1- 2019 092 946**
**US-B2- 8 415 471**

- **BAYER: "Raw Materials for Automotive Refinish Systems Desmodur/Desmophen/Bayhydrol/Bayhydur/Ro sk ydal", INTERNET CITATION, February 2005 (2005-02), pages 1-24, XP002613607, Retrieved from the Internet: URL:http://200.182.3.36/bpo/home.nsf/04bbd 938b0f97149c1256ac500564711/7710c8878da24 5 ab832570770063bb8e/$FILE/Repintura.pdf [retrieved on 2010-12-09]**
- **Ulrich Meier-Westhues: "Hydrophilierte Polyisocyanate" In: "Polyurethane: Lacke, Kleb- und Dichtstoffe", 2007, Vincentz Network GmbH & Co KG, XP055475338, ISBN: 978-3-86630-896-1 page 45, * the whole document ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present invention relates to a polyisocyanate composition, a coating composition and a coated substrate.

BACKGROUND OF THE INVENTION

A coating film formed by a two-liquid type polyurethane composition including, as a curing agent, a polyisocyanate composition derived from an aliphatic diisocyanate or an alicyclic diisocyanate exhibits excellent properties in terms of weather resistance, chemical resistance, abrasion resistance, or the like, and thus has been used widely as a coating material, an ink, an adhesive, or the like. In recent years, there has been a strong awareness of global environmental issues and aqueous two-liquid type polyurethane compositions in which no organic solvent is contained or the amount of an organic solvent is decreased have been proposed. However, in the case of an aqueous two-liquid type polyurethane composition, there are problems such as less water dispersibility, higher reactivity with water, or shorter pot life, in comparison with a solvent-based two-liquid type polyurethane composition, due to the constitution of the composition. Therefore, there is a demand for a polyisocyanate composition having high water dispersibility, while suppressing the reactivity of isocyanate groups with water when dispersed in water.

A polyisocyanate compound having water-dispersibility and an aqueous two-liquid type polyurethane composition using the same have been proposed in Patent Document 1 and Patent Document 2, for example.

A polyisocyanate composition having a silane coupling agent without having any active hydrogens has been proposed in Patent Document 3. A polyisocyanate composition including both a mercapto group-containing silane coupling agent and an alkoxysilane compound and aiming to improve pollution resistance has been proposed in Patent Document 4. A polyisocyanate composition having a particular silane coupling agent has been proposed in Patent Document 5.

DOCUMENTS OF RELATED ART

Patent Documents

Patent Document 1: Japanese Unexamined Patent Application Publication No. Hei 5-222150
Patent Document 2: Japanese Unexamined Patent Application Publication No. Hei 9-328654
Patent Document 3: Japanese Unexamined Patent Application Publication No. 2000-198920
Patent Document 4: Japanese Unexamined Patent Application Publication No. 2005-263839
Patent Document 5: Japanese Patent Publication No. 5557975

US 2003138642 A1 and EP 0953585 A1 disclose a polyisocyanate composition comprising a hydrophilic polyisocyanate obtained from an isocyanurate based on 1,6-diisocyanatohexane and a monofunctional polyethylene oxide polyether.

WO 2019121387 A1 discloses a polyisocyanate composition comprising a hydrophilic polyisocyanate Bayhydur® 3100 which comprises a hydrophilic polyisocyanate based on a oligomeric 1,6-diisocyanato hexane.

WO2016101093 A1, WO 2017185332 A1, WO 2015051526 A1 and WO 2010112605 A1 disclose polyisocyanate compositions comprising BAYHYDUR® XP2487/1 and/or BAYHYDUR® XP2655 which are polyisocyanates obtained from 3-(cyclohexylamino)-1-propanesulfonic acid (CAPS).

WO 2017082363 A1 and US 2019092946 A1 disclose polyisocyanate compositions comprising BAYHYDUR® 304 and BAYHYDUR® 305 which are polyisocyanates comprising a polyethylene oxide group and an isocyanurate group.

WO 2020226962 A1, published after the application date of the present application, discloses a polyisocyanate composition comprising a hydrophilic polyisocyanate Bayhydur® XP2457 which is obtained from 3-(cyclohexylamino)-1-propanesulfonic acid (CAPS).

SUMMARY OF THE INVENTION

PROBLEMS TO BE SOLVED BY THE INVENTION

However, the composition disclosed in Patent Document 1 or Patent Document 2 requires a high-speed stirring step to be dispersed in water. The composition disclosed in Patent Document 3 has difficulty in realizing both excellent

pot life and dispersibility when dispersed in water or a main agent including water. The composition disclosed in Patent Document 4 or Patent Document 5 has not been studied in terms of water-dispersibility.

An aqueous two-liquid type polyurethane composition is used to coat furniture, architectural material, lumber for houses, wood floors for houses or school facilities, trains, construction equipment or agricultural vehicles. A polyisocyanate composition having excellent dispersibility, excellent pot life when made into a coating composition, and excellent physical properties (such as hardness, water resistance and solvent-resistance) when made into a coating film is needed as a curing agent of an aqueous two-liquid type polyurethane composition.

The present invention provides, in light of the above-mentioned circumstances, a polyisocyanate composition having excellent dispersibility when dispersed in water or a main agent including water, excellent pot life when made into a coating composition, and excellent hardness, water resistance and solvent-resistance when made into a coating film.

MEANS TO SOLVE THE PROBLEMS

The present invention is set out in the appended claims.

EFFECTS OF THE INVENTION

The polyisocyanate composition of the above-mentioned embodiment exhibits excellent dispersibility when dispersed in water or a main agent including water, excellent pot life when made into a coating composition, and excellent hardness, water resistance and solvent-resistance when made into a coating film. The coating composition of the above-mentioned embodiment includes the polyisocyanate composition, and exhibits excellent pot life, and excellent hardness, water resistance and solvent-resistance when made into a coating film. The coated substrate of the above-mentioned embodiment includes a coating film formed by curing the coating composition, and the coating film exhibits excellent hardness, water resistance and solvent-resistance.

EMBODIMENTS FOR CARRYING OUT THE INVENTION

Embodiments for carrying out the present invention (hereinafter, referred to as "present embodiment" simply) will be explained below in detail. The present invention is not intended to be limited to the following present embodiments.

«Polyisocyanate composition»

The polyisocyanate composition of the present embodiment includes a hydrophilic polyisocyanate compound (A) and a silicon-containing compound (B). The hydrophilic polyisocyanate compound (A) is derived from a polyisocyanate compound derived from at least one diisocyanate selected from the group consisting of aliphatic diisocyanates, alicyclic diisocyanates and aromatic diisocyanates and a hydrophilic compound.

The amount of the silicon-containing compound, relative to 100 parts by mass of the polyisocyanate compound, is 1 part by mass to 50 parts by mass, preferably 2 parts by mass to 50 parts by mass, more preferably 5 parts by mass to 40 parts by mass, even more preferably 5 parts by mass to 30 parts by mass, and particularly preferably 5 parts by mass to 20 parts by mass. In the case where the amount of the silicon-containing compound is within the above-mentioned range, it is possible to obtain a polyisocyanate composition having excellent water-dispersibility, and exhibiting excellent hardness, water resistance and solvent-resistance, when made into a coating film. The polyisocyanate compound used as a reference of the amount of the silicon-containing compound is a raw material polyisocyanate compound used to produce the polyisocyanate composition, or, a hydrophilic polyisocyanate compound and an unintroduced polyisocyanate compound in which no hydrophilic groups are inroduced in the polyisocyanate composition.

The amount of the silicon-containing compound may be calculated from the formulation amount thereof in the preparation of the polyisocyanate composition, or may be calculated by liquid chromatography mass spectrometry (LC-MS).

Since the polyisocyanate composition of the present embodiment has the above-mentioned constitution, a coating composition having excellent dispersibility when dispersed in water or a main agent containing water and excellent pot life, and a coating film having excellent hardness, water resistance and solvent-resistance can be obtained, as shown in the examples below. Since such effects are exhibited, the polyisocyanate composition of the present embodiment is preferably used as a curing agent of an aqueous two-liquid type polyurethane composition.

The constitutive components of the polyisocyanate composition of the present embodiment will be specifically explained.

<Hydrophilic polyisocyanate compound (A)>

The hydrophilic polyisocyanate compound (A) is derived from a polyisocyanate compound and a hydrophilic compound. That is, the hydrophilic polyisocyanate compound is a reactant of the polyisocyanate compound and the hydrophilic compound, in which at least a part of isocyanate groups of the polyisocyanate compound and a functional group of the hydrophilic compound form a bond, thereby introducing a hydrophilic group thereinto. Thus, the polyisocyanate composition of the present embodiment can exhibit favorable water-dispersibility.

The polyisocyanate composition of the present embodiment may further contain an unintroduced polyisocyanate compound in which no hydrophilic groups are introduced, in addition to the hydrophilic polyisocyanate compound.

In the polyisocyanate composition of the present embodiment, the amount of hydrophilic group, relative to the total mass of the polyisocyanate composition, is preferably 1% by mass to 60% by mass, more preferably 1% by mass to 50% by mass, even more preferably 1% by mass to 40% by mass, and particularly preferably 1% by mass to 30% by mass. In the case where the amount of hydrophilic group is the above-mentioned upper limit or less, the curability when used as a curing agent of an aqueous two-liquid type polyurethane composition can be further enhanced.

[Polyisocyanate compound]

The polyisocyanate compound that serves as a raw material of the hydrophilic polyisocyanate compound is derived from at least one diisocyanate selected from the group consisting of aliphatic diisocyanates, alicyclic diisocyanates and aromatic diisocyanates. That is, the polyisocyanate compound is a reactant of the above-mentioned diisocyanate.

Although there is no particular limitation on the aliphatic diisocyanate, examples thereof include 1,4-diisocyanatobutane, 1,5-diisocyanatopentane, ethyl(2,6-diisocyanato)hexanoate, 1,6-diisocyanatohexane (hereinafter, may be abbreviated as "HDI"), 1,9-diisocyanatononane, 1,12-diisocyanatododecane, and 2,2,4- or 2,4,4-trimethyl-1,6-diisocyanatohexane.

Although there is no particular limitation on the alicyclic diisocyanate, examples thereof include 1,3- or 1,4-bis(isocyanatomethyl)cyclohexane (hereinafter, may be abbreviated as "hydrogenerated XDI"), 1,3- or 1,4-diisocyanatocyclohexane, 3,5,5-trimethyl 1-isocyanato-3-(isocyanatomethyl)cyclohexane (hereinafter, may be abbreviated as "IPDI"), 4-4'-diisocyanato-dicyclohexylmethane (hereinafter, may be abbreviated as "hydrogenerated MDI"), and 2,5- or 2,6-diisocyanatomethylnorbornane.

Although there is no particular limitation on the aromatic diisocyanate, examples thereof include m- and p-xylylene diisocyanate (XDI), and $\alpha,\alpha,\alpha',\alpha'$-tetramethyl-p-xylylene diisocyanate.

Among these, the diisocyanate is preferably HDI, IPDI, hydrogenerated XDI, hydrogenerated MDI, or XDI, and more preferably HDI, IPDI, hydrogenerated XDI, or hydrogenerated MDI.

Although there is no particular limitation on the polyisocyanate compound derived from the above-mentioned diisocyanate, examples thereof include the following polyisocyanate compounds (a) to (h):

(a) polyisocyanate compound having a urethodione group obtained by cyclodimerization of two isocyanate groups;
(b) polyisocyanate compounds having an isocyanurate group or an iminooxadiazinedione group obtained by cyclotrimerization of three isocyanate groups;
(c) polyisocyanate compounds having a biuret group obtained by reaction of three isocyanate groups and one water molecule;
(d) polyisocyanate compounds having an oxadiazine trion group obtained by reaction of two isocyanate groups and one carbon dioxide molecule;
(e) polyisocyanate compounds having a plurality of urethane groups obtained by reaction of one isocyanate group and one hydroxyl group;
(f) polyisocyanate compounds having an allophanate group obtained by reaction of two isocyanate groups and one hydroxy group;
(g) polyisocyanate compounds having an acylurea group obtained by reaction of one isocyanate group and one carboxyl group; and
(h) polyisocyanate compounds having a urea group obtained by reaction of one isocyanate group and one primary or secondary amine.

Among these, the polyisocyanate compounds having a biuret group, an isocyanurate group, a urethane group, a urethodione group, or an allophanate group in a molecule thereof are preferable. The polyisocyanate compounds having a biuret group have excellent adhesiveness. The polyisocyanate compounds having an isocyanurate group have excellent weather resistance. The polyisocyanate compounds having a urethane group obtained using an alcohol compound having a long side chain have excellent elasticity and extensibility. The polyisocyanate compounds having an urethodione group have low viscosity. The polyisocyanate compounds having an allophanate group have low viscosity

and can impart properties (such as polar character or Tg) originating from an introduced hydroxy group-containing compound.

The polyisocyanate compound may contain a polyisocyanate compound derived from an aliphatic triisocyanate. Examples of the aliphatic triisocyanate include 1,3,6-triisocyanatohexane, 1,8-diisocyanato-4-isocyanatomethyloctane, and 2-isocyanatoethyl-2,6-diisocyanato-hexanoate.

One of the above-mentioned polyisocyanate compounds may be used alone, or at least two thereof may be used together.

(Preparation method of the polyisocyanate compound)

Although there is no particular limitation on the preparation method of the polyisocyanate compound having an isocyanurate group, examples thereof include a method in which diisocyanates are subjected to an isocyanurate-forming reaction using a catalyst, and then the reaction is terminated when a predetermined conversion ratio is reached, followed by removing unreacted diisocyanates from the resultant.

Although there is no particular limitation on the catalyst to be used in the isocyanurate-forming reaction, basic catalysts are preferable, and specific examples thereof include: hydroxides and organic weak acid salts of tetraalkylammonium; hydroxides and organic weak acid salts of hydroxyalkylammonium; alkali metal salts of alkylcarboxylic acids; metal alkolates; aminosilyl group-containing compounds; Mannich bases; mixtures of tertiary amines and epoxy compounds; and phosphoric compounds.

Examples of the tetraalkylammonium include tetramethylammonium, and tetraethylammonium.

Examples of the organic weak acid include acetic acid and capric acid.

Examples of the hydroxyalkyl ammonium include trimethylhydroxypropyl ammonium, trimethylhydroxyethyl ammonium, triethylhydroxypropyl ammonium, and triethylhydroxyethyl ammonium.

Examples of the alkylcarboxylic acid include acetic acid, caproic acid, octylic acid, and myristic acid.

Examples of a metal constituting the alkali metal salt include tin, zinc, and lead.

Examples of the metal alkolate include sodium alkolate, and potassium alkolate.

Examples of the aminosilyl group-containing compound include hexamethyl disilazane.

Examples of the phosphoric compound include tributylphosphine.

The amount of catalyst used, relative to the total mass of the raw material diisocyanate (and alcohol, as needed), is preferably 10ppm by mass to 1.0% by mass. The catalyst may be inactivated to terminate the isocyanurate-forming reaction by adding an acidic substance to neutralize the catalyst, or by conducting thermal decomposition or chemical decomposition. Examples of the acidic substance to neutralize the catalyst include phosphoric acid, and acidic phosphoric acid ester.

The yield of the polyisocyanate compound tends to be generally 10% by mass to 70% by mass. An increase in the yield of the polyisocyanate compound tends to enhance the viscosity thereof. The yield can be calculated from the mass ratio of the resultant polyisocyanate compound to the total mass of raw material components.

Although there is no particular limitation as to the reaction temperature of the isocyanurate-forming reaction, the reaction temperature is preferably 50°C to 200°C, and more preferably 50°C to 150°C. In the case where the reaction temperature is the above-mentioned lower limit or more, the reaction tends to to proceed readily. In the case where the reaction temperature is the above-mentioned upper limit or less, a side reaction that causes coloration tends to be suppressed.

After the isocyanurate-forming reaction is ended, unreacted diisocyanate monomers are preferably removed by using a thin film evaporator, or subjecting to extraction. Even in the case where the polyisocyanate compound contains unreacted diisocyanates, the amount of diisocyanates, relative to the total mass of the polyisocyanate compound, is preferably 3.0% by mass or less, more preferably 1.0% by mass or less, and even more preferably 0.5% by mass or less. In the case where the amount of remaining unreacted diisocyanate monomers is within the above-mentioned range, the curability tends to be further improved.

Examples of the method for preparing the polyisocyanate compound having an allophanate group include a method in which an alcohol is added to diisocyanate monomers, and an allophanate-forming reaction catalyst is used.

As the alcohol used to form an allophanate group, an alcohol constituted only by carbon, hydrogen and oxygen is preferable.

Although the alcohol is not limited to the following alcohols, examples thereof include monoalcohols and dialcohols. One of the alcohols may be used alone, or at least two thereof may be used in combination.

Examples of the monoalcohols include methanol, ethanol, propanol, butanol, pentanol, hexanol, heptanol, octanol, and nonanol.

Examples of the dialcohols include ethylene glycol, 1,3-butanediol, neopentyl glycol, and 2-ethylhexanediol.

Among these, the alcohol is preferably a monoalcohol, and more preferably a monoalcohol having a molecular weight of 200 or less.

The molar ratio of isocyanate groups of the diisocyanate monomers, relative to hydroxyl groups of the alcohol, is preferably 10/1 to 1000/1, and more preferably 100/1 to 1000/1. In the case where the molar ratio is the above-mentioned lower limit or more, the average number of isocyanate groups (the average number of functional groups) can be further ensured.

Although there is no limitation on the allophanate-forming reaction catalyst, examples thereof include alkylcarboxylic acid salts such as salts of tin, lead, zinc, bismuth, zirconium, and zirconyl.

Examples of tin alkylcarboxylates (organic tin compounds) include tin 2-ethylhexanoate and dibutyl tin dilaurate.

Examples of lead alkylcarboxylates (organic lead compounds) include lead 2-ethylhexanoate.

Examples of zinc alkylcarboxylates (organic zinc compounds) include zinc 2-ethylhexanoate.

Examples of bismuth alkylcarboxylates include bismuth 2-ethylhexanoate.

Examples of zirconium alkylcarboxylates include zirconium 2-ethylhexanoate.

Examples of zirconyl alkylcarboxylates include zirconyl 2-ethylhexanoate.

One of these catalysts may be used alone, or at least two thereof may be used in combination.

The above-mentioned isocyanurate-forming reaction catalyst may serve as an allophanate-forming reaction catalyst. In the case where the isocyanurate-forming reaction catalyst is used to conduct an allophanate-forming reaction, an isocyanurate-type polyisocyanate is also formed inevitably.

It is preferable that an isocyanurate-forming reaction catalyst be used as an allophanate-forming reaction catalyst to conduct both an allophanate-forming reaction and an isocyanurate-forming reaction, from the viewpoint of economical production.

The upper limit of the above-mentioned allophanate-forming reaction catalyst used, relative to the mass of used diisocyanate monomers, is preferably 10000 ppm by mass, more preferably 1000 ppm by mass, and even more preferably 500 ppm by mass. In contrast, although there is no particular limitation on the lower limit of the above-mentioned allophanate-forming reaction catalyst, the lower limit may be 10 ppm by mass, for example.

The lower limit of the allophanate-forming reaction temperature is preferably 60°C, more preferably 70°C, even more preferably 80°C, and particularly preferably 90°C. In contrast, the upper limit of the allophanate-forming reaction temperature is preferably 160°C, more preferably 155°C, even more preferably 150°C, and particularly preferably 145°C.

The allophanate-forming reaction temperature is preferably 60°C to 160°C, more preferably 70°C to 155°C, even more preferably 80°C to 150°C, and particularly preferably 90°C to 145°C.

In the case where the allophanate-forming reaction temperature is the above-mentioned lower limit or more, the reaction rate can be further improved. In the case where the allophanate-forming reaction temperature is the above-mentioned upper limit or less, the change in characteristics such as the coloration of the polyisocyanate tends to be further suppressed.

The lower limit of the allophanate-forming reaction time is preferably 0.2 hours, more preferably 0.4 hours, even more preferably 0.6 hours, even more preferably 0.8 hours, and even more preferably 1 hour. In contrast, the upper limit of the allophanate-forming reaction time is preferably 8 hours, more preferably 6 hours, even more preferably 4 hours, even more preferably 3 hours, and even more preferably 2 hours.

The allophanate-forming reaction time is preferably 0.2 hours to 8 hours, more preferably 0.4 hours to 6 hours, even more preferably 0.6 hours to 4 hours, even more preferably 0.8 hours to 3 hours, and even more preferably 1 hour to 2 hours.

In the case where the allophanate-forming reaction time is the above-mentioned lower limit or more, the viscosity of the polyisocyanate is further decreased. In contrast, in the case where the allophanate-forming reaction time is the above-mentioned upper limit or less, the change in characteristics such as the coloration of the polyisocyanate tends to be suppressed further effectively.

The allophanate-forming reaction is terminated by adding a deactivator against the allophanate-forming reaction catalyst, such as phosphoric acid or methyl para-toluenesulfonate, when the desired yield is obtained.

In the polyisocyanate compound, the molar ratio of allophanate groups to isocyanurate groups (hereinafter, may also be abbreviated as "allophanate group / isocyanurate group") is preferably 0.50 or less, from the viewpoint of improvement in the cross-linkability. The molar ratio of the allophanate group / isocyanurate group may be determined by a $^{13}$C-NMR measurement method.

Examples of the method for producing a polyisocyanate compound having a urethane group include a method in which a divalent to hexavalent alcohol-based compound such as trimethylolpropane and a diisocyanate are reacted such that the molar ratio of isocyanate groups of the diisocyanate to hydroxyl groups of the alcohol-based compound becomes approximately 1/2 to 1/100, followed by purifying the resultant by removing unreacted diisocyanate therefrom.

(Physical properties of polyisocyanate compound)

The number-average molecular weight of the polyisocyanate compound is preferably 450 to 4000, more preferably 500 to 3500, and even more preferably 550 to 3000, from the viewpoint of the solvent-resistance of the resultant

coating film.

The number-average molecular weight may be measured using gel permeation chromatography (GPC).

The average number of functional groups in the polyisocyanate compound is preferably 1.8 to 6.2, more preferably 2.0 to 5.6, and even more preferably 2.5 to 4.6, from the viewpoint of the solvent-resistance of the resultant coating film and the retention ratio of isocyanate groups.

The average number of functional groups refers to the number of isocyanate functional groups which are statistically contained in one molecule of the polyisocyanate, and may be calculated by the following formula using the number-average molecular weight (Mn) of the polyisocyanate and the amount of isocyanate groups (NCO%).

$$[\text{Average number of functional groups}] = \text{Mn} \times \text{NCO\%} / 4200$$

[Hydrophilic compound]

A hydrophilic compound, which is a raw material of a hydrophilic polyisocyanate compound, is a compound having a hydrophilic group. It is preferable that each one molecule of the hydrophilic compound have at least one active hydrogen group that can react with an isocyanate group of a polyisocyanate so as to react with one isocyanate group.

(Anionic compound)

The hydrophilic compound is a hydroxyl group-containing sulfonic acid or an amine salt thereof. Examples of the hydroxyl group-containing sulfonic acids include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxy ethyl)-1-piperazineethanesulfonic acid, 4-(2-hydroxyethyl)-1-piperazinepropanesulfonic acid, 2-hydroxy-3-morpholinopropanesulfonic acid, and particular polyether sulfonates ( such as Tegomer (trademark), commercially available (The Goldschmidt AG, Essen, Germany)).

Among these, 2-hydroxyethanesulfonic acid, 3-hydroxypropanesulfonic acid, hydroxybenzenesulfonic acid or hydroxy(methyl)benzenesulfonic acidis preferable.

The acidic sulfonic acid group of the anionic compound is preferably neutralized with ammonia or an organic amine compound.

Examples of the organic amine compound include: linear tertiary amines such as trimethylamine, triethylamine, tripropylamine, tributylamine, trioctylamine, trilaurylamine, tridecylamine, and tristearylamine; branched tertiary amines such as triisopropylamine, triisobutylamine, tri-2-ethylhexylamine, and tri-branched tridecylamine; tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylbenzylamine, N,N-diethyl cyclohexyl amine, N,N-dicyclohexylmethylamine, N,N-dicyclohexyl ethyl amine, and tricyclohexylamine; tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine. One of these organic amine compounds may be used alone, or at least two thereof may be used in combination.

Among these, C5-30 tertiary amines are preferable, and specific examples thereof include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, and quinoline. One of these preferable organic amine compounds may be used alone, or at least two thereof may be used in combination.

Although the polyisocyanate compound is modified with the hydrophilic compound (by introducing a hydrophilic

group derived from the hydrophilic compound into the polyisocyanate compound) so as to make the polyisocyanate compound be dispersed in water, deterioration in physical properties (such as hardness, water resistance, or solvent resistance) of the resultant coating film tends to be prevented by controlling the modification rate not to be excessively high. Since the anionic compound has a high emulsifying capacity, the anionic compound can exhibit a high emulsifying effect even at a small amount.

The lower limit of the amount of sulfur atoms in the polyisocyanate composition, relative to the total mass (100% by mass) of the polyisocyanate composition, is preferably 0.03% by mass, more preferably 0.05% by mass, and even more preferably 0.08% by mass, from the viewpoint of the water dispersibility. When the amount of sulfur atoms is the above-mentioned lower limit or more, the surface tension tends to decrease, thereby further improving water dispersibility.

The upper limit of the amount of sulfur atoms in the polyisocyanate composition, relative to the total mass (100% by mass) of the polyisocyanate composition, is preferably 3.0% by mass, more preferably 2.5% by mass, and even more preferably 2.0% by mass, from the viewpoint of the physical properties of the resultant coating film. When the amount of sulfur atoms is the above-mentioned upper limit or less, the amount of isocyanate groups to be used in crosslinking is increased, thereby further improving the physical properties of the resultant coating film.

The amount of sulfur atoms in the polyisocyanate composition, relative to the total mass (100% by mass) of the polyisocyanate composition, is preferably 0.03% by mass to 3.0% by mass, more preferably 0.05% by mass to 2.5% by mass, and even more preferably 0.08% by mass to 2.0% by mass.

Although the method for controlling the amount of sulfur atoms to be within the above-mentioned range is not limited to the following method, examples thereof include a method in which the blend ratio of the sulfonic acid group-containing compound and the raw material polyisocyanate compound is adjusted. The amount of sulfur atoms is measured by ion chromatography (IC).

Although the method for reacting the raw material polyisocyanate compound and the anionic compound is not limited to the following method, examples thereof include a method in which a terminal isocyanate group of the raw material polyisocyanate compound and an active hydrogen group of the anionic compound are reacted.

<Silicon-containing compound (B)>

The silicon-containing compound (B) is an organic compound having a silicon atom in a molecule thereof. Particularly, a compound of the following general formula (I) is preferable from the viewpoint of the water-dispersibility and the pot life. Hereinafter, the compound of the following general formula (I) may be abbreviated as "silicon-containing compound (I)".

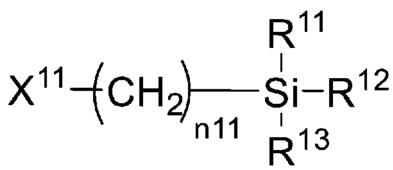

(I)

In the general formula (I), $X^{11}$ represents an alkyl group, a vinyl group, an epoxy group, a styryl group, a methacrylate group, an acrylate group, an isocyanurate group, a haloalkyl group or a mercapto group.

$R^{11}$, $R^{12}$ and $R^{13}$ each independently represents a hydrogen atom, an alkoxy group or an alkyl group. At least two selected from the group consisting of $R^{11}$, $R^{12}$ and $R^{13}$ may bind together to form a ring. The ring is an aromatic ring, or a C5 or C6 cycloalkyl group. $R^{11}$, $R^{12}$ and $R^{13}$ may be identical to or different from each other. At least one selected from the group consisting of $R^{11}$, $R^{12}$ and $R^{13}$ is an alkoxy group.

n11 is an integer of 0 to 10.

Examples of the alkoxy group as $R^{11}$, $R^{12}$ and $R^{13}$ include a methoxy group, an ethoxy group, a propoxy group, an isopropoxy group, a butoxy group, an isobutoxy group, a tert-butoxy group, a pentyloxy group, and a hexyloxy group. Among these, a methoxy group or an ethoxy group is preferable.

The alkoxy group as $R^{11}$, $R^{12}$ and $R^{13}$ may become a hydroxyl group by a hydrolysis reaction. In this case, at least one or all of $R^1$, $R^2$ and $R^3$ may become (a) hydroxyl group(s) by a hydrolysis reaction.

As the alkyl group as $R^{11}$, $R^{12}$ and $R^{13}$, a C1-6 linear or branched alkyl group is preferable. Examples of such an alkyl group include a methyl group, an ethyl group, a n-propyl group, an isopropyl group, a n-butyl group, an isobutyl group, a tert-butyl group, a n-pentyl group, and a n-hexyl group. Among these, C1-4 alkyl groups are preferable, and a methyl group is more preferable.

The haloalkyl group as $X^{11}$ is a group in which at least one hydrogen atom constituting the alkyl group as $R^{11}$, $R^{12}$ and $R^{13}$ is substituted with a halogen atom. Examples of the halogen atom constituting the haloalkyl group include fluorine, chlorine, bromine, and iodine. Examples of the haloalkyl group include a chloromethyl group, a fluoromethyl

group, an iodomethyl group, a trifluoromethyl group, a chloroethyl group, a fluoroethyl group, an iodoethyl group, and a chloropropyl group.

Specific examples of the silicon-containing compound (I) include vinyltrimethoxysilane, vinyltriethoxysilane, 2-(3,4-epoxy cyclohexyl)ethyltrimethoxy silane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxy silane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, 3-isocyanatepropyltriethoxysilane, tris-(trimethoxysilylpropyl)isocyanurate, 3-mercaptopropylmethyldimethoxysilane, 3-mercaptopropyltrimethoxysilane, 3-chloropropyltrimethoxysilane, methyltrimethoxysilane, dimethyldimethoxysilane, phenyltrimethoxysilane, dimethoxydiphenylsilane, n-propyltrimethoxysilane, hexyltrimethoxysilane, decyltrimethoxysilane, methyltriethoxysilane, dimethyldiethoxysilane, phenyltriethoxysilane, n-propyltriethoxysilane, hexyltriethoxysilane, and octyltriethoxysilane. One of these silicon-containing compounds (I) may be used alone, or at least two thereof may be used in combination.

The silicon-containing compound (I) may have an unsaturated hydrocarbon group or an epoxy group as $X^{11}$. Examples of the silicon-containing compound (I) having an unsaturated hydrocarbon group include silicon-containing compounds (I) having a vinyl group, a methacrylate group or an acrylate group (that is, silicon-containing compounds (I) in which $X^{11}$ is a vinyl group, a methacrylate group or an acrylate group). Specific examples of the silicon-containing compounds (I) in which $X^{11}$ is a vinyl group, a methacrylate group or an acrylate group include 3-methacryloxypropyltrimethoxysilane, and 3-acryloxypropyltrimethoxysilane.

<Other components>

The polyisocyanate composition of the present embodiment may further contain other components in addition to the hydrophilic polyisocyanate compound and the silicon-containing compound. Although there is no particular limitation on the other components, examples thereof include solvents, antioxidants, light stabilizers, polymerization inhibitors, and surfactants.

The solvents may be hydrophilic solvents or hydrophobic solvents. These solvents may be used alone or in combination.

Although there is no particular limitation on the hydrophobic solvents, examples thereof include mineral spirits, solvent naphtha, LAWS (Low Aromatic White Spirit), HAWS (High Aromatic White Spirit), toluene, xylene, cyclohexane, esters, ketones, and amides.

Examples of the esters include ethyl acetate, and butyl acetate.

Examples of the ketones include acetone, methyl ethyl ketone, methylisobutylketone, and cyclohexanone.

Examples of the amides include N,N-dimethylformamide, and N,N-dimethylacetamide.

Although there is no particular limitation on the hydrophilic solvent, examples thereof include alcohols, ethers, and esters such as etheralcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, and dipropylene glycol dimethyl ether.

Examples of the esters of etheralcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate.

The amount of the solvent in the polyisocyanate composition of the present embodiment, relative to the total mass of the polyisocyanate composition of the present embodiment, is preferably 0% by mass to 90% by mass, more preferably 0% by mass to 50% by mass, and even more preferably 0% by mass to 30% by mass.

Examples of the antioxidants and the light stabilizers include the following compounds (a) to (e). One of these compounds may be contained alone, or at least two thereof may be contained.

(a) Aliphatic, aromatic or alkyl-substituted aromatic esters of phosphoric acid or phosphorus acid, and hypophosphorous acid derivatives.
(b) Phosphorous compounds, such as phenylphosphonic acid, phenylphosphinic acid, diphenylphosphonic acid, polyphosphonate, dialkylpentaerythritol diphosphate, and dialkylbisphenol A diphosphate.
(c) Phenol-based derivatives (particularly, hindered phenol compounds).
(d) Sulfur-containing compounds such as thioether-based compounds, dithionate-based compounds, mercaptobenzimidazole-based compounds, thiocarbanilide-based compounds, and thiodipropionate esters.
(e) Tin-based compounds such as tin malate and dibutyltin monoxide.

Examples of the polymerization inhibitors include hydroquinones, phenols, cresols, catechols, and benzoquinones. Specific examples of the polymerization inhibitors include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. One of these compounds may be contained alone, or at least two thereof may be contained.

Examples of the surfactants include conventionally-known anionic surfactants, cationic surfactants, and ampholytic surfactants.

The total amount of the antioxidants, the light stabilizers, the polymerization inhibitors and the surfactants in the polyisocyanate composition of the present embodiment, relative to the total mass of the polyisocyanate composition of the present embodiment, is preferably 0% by mass to 10% by mass, more preferably 0% by mass to 5% by mass, and even more preferably 0% by mass to 2% by mass.

<Preparation method of polyisocyanate composition>

Examples of the preparation method of the polyisocyanate composition of the present embodiment include a method in which a polyisocyanate compound and a hydrophilic compound are reacted to obtain a hydrophilic polyisocyanate compound, followed by mixing the resultant hydrophilic polyisocyanate compound with a silicon-containing compound.

In the reaction of the polyisocyanate compound and the hydrophilic compound, an organic metal salt, a tertiary amine-based compound, or an alkali metal alkolate may be used as a catalyst. Examples of metal constituting the organic metal salt include tin, zinc, and lead. Examples of alkali metal include sodium.

The reaction temperature of the polyisocyanate compound and the hydrophilic compound is preferably -20°C to 150°C, and more preferably 30°C to 130°C. In the case where the reaction temperature is the above-mentioned lower limit or more, the reactivity tends to be enhanced. In the case where the reaction temperature is the above-mentioned upper limit or less, the side reaction tends to be suppressed further effectively.

It is preferable that the hydrophilic compound be reacted with the polyisocyanate completely such that no unreacted hydrophilic compounds remain. In the case where the unreacted hydrophilic compound is absent, the water-dispersibility of the polyisocyanate composition and the pot life of the coating composition tend to become further favorable.

In the case where the hydrophilic compound is a hydroxyl group-containing sulfonic acid, the preparation method of the polyisocyanate composition of the present embodiment preferably includes a step (A) in which an amine salt of sulfonic acid having a hydroxyl group and a polyisocyanate are mixed and reacted. Alternatively, the preparation method of the polyisocyanate composition of the present embodiment preferably includes a step (B) in which a sulfonic acid having a hydroxyl group, a polyisocyanate, and the above-mentioned amine compound are mixed and reacted.

In the step (A), it is preferable that the amine salt of sulfonic acid be prepared in advance, followed by adding the amine salt to the polyisocyanate. In the step (B), the hydroxyl group-containing sulfonic acid and the amine compound may be added to the polyisocyanate simultaneously or sequentially.

Particularly, the step (A) is preferably conducted, and it is more preferable that the amine salt of sulfonic acid be prepared in advance, followed by adding the amine salt to the polyisocyanate.

In the reaction step, the blend ratio of the polyisocyanate to either the hydroxyl group-containing sulfonic acid or the amine salt thereof satisfies the molar ratio, isocyanate group / hydroxyl group, of 10 to 100, from the viewpoint of emulsifiability and physical properties of the resultant coating film.

Although the reaction temperature or the reaction time may be appropriately determined depending on the reaction progress in the reaction step, the reaction temperature is preferably 0°C to 150°C, and the reaction time is preferably 30 minutes to 48 hours.

A conventionally-known catalyst may be used in the reaction in accordance with circumstances. Although there is no particular limitation on the catalyst, examples thereof include the following compounds (a) to (f). These compounds may be used alone or mixed to be used together.

(a) Organic tin compounds such as tin octanoate, tin 2-ethyl-1-hexanoate, tin ethylcaproate, tin laurate, tin palmitate, dibutyltin oxide, dibutyltin dichloride, dibutyltin diacetate, dibutyltin dimalate, dibutyltin dilaurate, dioctyltin diacetate, and dioctyltin dilaurate.
(b) Zinc chloride, and organic zinc compounds such as zinc octanoate, zinc 2-ethyl-1-hexanoate, zinc 2-ethylcaproate, zinc stearate, zinc naphthenate, and zinc acetylacetonate.
(c) Organic titanium compounds.
(d) Organic zirconium compounds.
(e) Tertiary amines such as triethylamine, tributylamine, N,N-diisopropylethylamine, and N,N-dimethylethanolamine.
(f) Diamines such as triethylenediamine, tetramethylethylenediamine, and 1,4-diazabicyclo[2.2.2]octane.

A polyisocyanate composition is obtained by preparing a hydrophilic polyisocyanate compound by the above-mentioned reaction step, followed by adding a silicon-containing compound thereto and then stirring the mixture sufficiently. The amount of the silicon-containing compound may be appropriately controlled such that the amount of the above-mentioned silicon-containing compound falls within the above-mentioned range.
In the preparation method of the polyisocyanate composition of the present embodiment, a solvent may be used or may not be used. The solvent to be used in the preparation method of the polyisocyanate composition of the present embodiment may be a hydrophilic solvent or a hydrophobic solvent. Examples of the hydrophilic solvent and the hydrophobic solvent include the same solvents as those exemplified as other components.
In the preparation method of the polyisocyanate composition of the present embodiment, at least one selected from the group consisting of antioxidants, light stabilizers, polymerization inhibitors and surfactants may be further added in addition to the hydrophilic polyisocyanate compound and the silicon-containing compound. Examples of the antioxidants, the light stabilizers, the polymerization inhibitors and the surfactants include the same compounds as those exemplified as other components.

<Characteristics of polyisocyanate composition>

In the case where the hydrophilic compound in the polyisocyanate composition of the present embodiment is a hydroxyl group-containing sulfonic acid, the modification rate by the hydroxyl group-containing sulfonic acid, relative to 100 mol of isocyanate groups in a raw material polyisocyanate compound, is preferably 0.25 mol to 50 mol, more preferably 0.5 mol to 20 mol, and even more preferably 1 mol to 10 mol, from the viewpoint of emulsifiability and physical properties of the resultant coating film.
The modification rate by the hydroxyl group-containing sulfonic acid may be measured by ion chromatography (IC).
The amount of isocyanate groups in the polyisocyanate composition of the present embodiment, relative to 100% by mass of non-volatile components, is preferably 10% by mass to 25% by mass, and more preferably 15% by mass to 24% by mass, from the viewpoint of solvent-resistance of the resultant coating film. Although there is no particular limitation on the method for controlling the amount of isocyanate groups to be within the above-mentioned range, examples thereof include a method in which the blend ratio of a hydrophilic compound and a polyisocyanate compound is adjusted. The amount of isocyanate groups may be measured by the method described in below examples, for example.

<<Coating composition>>

A coating composition of the present embodiment contains the above-mentioned polyisocyanate composition.
Although the coating composition of the present embodiment may be used as an organic solvent-based coating composition, the coating composition is preferably used as an aqueous coating composition in which the above-mentioned polyisocyanate composition and a resin that contributes to formation of a coating film are dissolved or dispersed in a medium containing water as the main component thereof. Particularly, the coating composition may also be used as an architectural coating material, automotive coating material, automotive refinishing coating material, coating material to be applied on plastics, tackifier, adhesive, building material, household water-based coating material, other coating agent, sealing agent, ink, casting material, elastomer, foam, plastic raw material, or fiber treatment agent.

<Resin>

Although there is no particular limitation on the resin as the main agent, examples thereof include acrylic resins, polyester resins, polyether resins, epoxy resins, fluorine resins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.
Among these, the resin is preferably an acrylic resin or a polyester resin.

(Acrylic resin)

Although there is no particular limitation on the acrylic resin, examples thereof include acrylic resins formed by polymerizing one or a mixture of the following polymerizable monomers (a) to (e). One of these acrylic resins may be used alone or a mixture thereof may be used.

(a) (Meth)acrylic esters, such as methyl (meth)acrylate, ethyl (meth)acrylate, isopropyl (meth)acrylate, n-butyl (meth)acrylate, 2-ethylhexyl (meth)acrylate, and lauryl (meth)acrylate.
(b) (Meth)acrylic esters having an active hydrogen, such as 2-hydroxyethyl (meth)acrylate, 2-hydroxypropy

(meth)acrylate, 2-hydroxybutyl (meth)acrylate, 3-hydroxypropyl (meth)acrylate, and 4-hydroxybutyl (meth)acrylate.
(c) Unsaturated carboxylic acids, such as acrylic acid, methacrylic acid, maleic acid, and itaconic acid.
(d) Unsaturated amides such as acrylamide, N-methylol acrylamide, and diacetone acrylamide.
(e) Polymerizable monomers, such as glycidyl methacrylate, styrene, vinyl toluene, vinyl acetate, acrylonitrile, dibutyl fumarate, p-styrenesulfonic acid, or allyl sulfosuccinic acid.

Although an emulsion polymerization method is generally adopted as a polymerization method thereof, a suspension polymerization method, a dispersion polymerization method, or a solution polymerization method may also be adopted. In the emulsion polymerization, polymerization may be conducted in a stepwise manner.

(Polyester resins)

Although there is no particular limitation on the polyester resin, examples thereof include polyester resins obtained by condensation reaction of one or a mixture of carboxylic acids and one or a mixture of polyhydric alcohols.
Examples of the carboxylic acids include succinic acid, adipic acid, sebacic acid, dimer acid, maleic anhydride, phthalic anhydride, isophthalic acid, terephthalic acid, trimellitic acid, and pyromellitic acid.
Examples of the polyhydric alcohol include diols, triols, and tetraols.
Examples of the diols include ethylene glycol, diethylene glycol, triethylene glycol, propylene glycol, dipropylene glycol, tripropylene glycol, 1,2-propanediol, 1,3-propane diol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol.
Examples of the triols include glycerin, and trimethylolpropane.
Examples of the tetraols include diglycerin, dimethylolpropane, and pentaerythritol.
Alternatively, polycaprolactones obtained by ring-opening polymerization of ε-caprolactone with a hydroxyl group of a polyol having a low molecular weight may also be used as polyester resins.

(Polyether resins)

Examples of the polyether resins include the following resins (a) to (d).

(a) Polyether polyols obtained by adding one or a mixture of alkylene oxides to one or a mixture of polyvalent hydroxy compounds using a strong basic catalyst.
(b) Polyether polyols obtained by reacting an alkylene oxide with a polyamine compound.
(c) Polyether polyols obtained by ring-opening polymerization of cyclic ethers.
(d) Polymer polyols obtained by polymerization of acrylamides using the polyether polyols (a) to (c) as mediums.

Examples of the polyvalent hydroxyl compounds used in (a) include the following compounds (i) to (vi).

(i) Diglycerin, ditrimethylol propane, pentaerythritol, and dipentaerythritol.
(ii) Sugar alcohol-based compounds such as erythritol, D-threitol, L-arabinitol, ribitol, xylitol, sorbitol, mannitol, galactitol, and rhamnitol.
(iii) Monosaccharides such as arabinose, ribose, xylose, glucose, mannose, galactose, fructose, sorbose, rhamnose, fucose, and ribodesose.
(iv) Disaccharides such as trehalose, sucrose, maltose, cellobiose, gentiobiose, lactose, and melibiose.
(v) Trisaccharides such as raffinose, gentianose, and melicitose.
(vi) Tetrasaccharides such as stachyose.

Examples of the strong basic catalyst used in (a) include hydroxides of alkali metals, alkolates, and alkylamines. Examples of the alkali metals include lithium, sodium, and potassium.
Examples of the alkylene oxide used in (a) include ethylene oxide, propylene oxide, butylene oxide, cyclohexene oxide, and styrene oxide.
Examples of the polyamine compounds used in (b) include ethylene diamines.
Examples of the cyclic ethers used in (c) include tetrahydrofuran.
In the coating composition of the present embodiment, these resins may be contained together with a resin such as a melamine-based curing agent, a urethane dispersion, a urethane acrylic emulsion, as needed.
It is preferable that these resins be emulsified, dispersed or dissolved in water, and therefore carboxyl groups or sulfone groups contained in the resins, may be neutralized.

Although there is no particular limitation on a neutralizing agent available to neutralize the carboxyl groups or the sulfone groups, examples thereof include ammonia and water-soluble amino compounds.
Examples of the water-soluble amino compounds include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. One of these may be used alone or at least two thereof may be used in combination.
Among these, the neutralizing agent is preferably tertiary amine, and more preferably triethylamine or dimethylethanolamine.

<Other components>

The coating composition of the present embodiment may further contain an additive which is commonly added to a coating material, in addition to the above-mentioned polyisocyanate composition and the resin. Examples of the additive include inorganic pigments, organic pigments, extender pigments, silane coupling agents, titanium coupling agents, organic phosphoric acid salts, organic phosphorous acid salts, thickeners, leveling agents, thixotropy imparting agents, anti-foaming agents, anti-freezing agents, delusterants, crosslinking catalysts (hardening acceleration catalysts), anti-sticking agents, dispersants, wetting agents, fillers, plasticizers, lubricants, reductants, preservatives, anti-fungal agents, deodorants, anti-yellowing agents, ultraviolet absorbers, anti-static agents, electrostatic modifiers, or anti-setting agents. One of these additives may be contained alone, or at least two thereof may be contained together.
Although the crosslinking catalysts (hardening acceleration catalysts) are not limited to the following examples, examples thereof include the following compounds (a) and (b).

(a) Metal salts such as dibutyltin dilaurate, tin 2-ethylhexanoate, zinc 2-ethylhexanoate, and cobalt salts.
(b) Tertiary amines such as triethylamine, pyridine, methylpyridine, benzyldimethylamine, N, N-dimethylcyclohexylamine, N-methylpiperidine, pentamethyl diethylene triamine, and N,N'-end ethylene piperazine, and N,N'-dimethyl piperazine.

The coating composition of the present embodiment may further contain a surfactant in addition to the above-mentioned polyisocyanate composition and the resin so as to improve the dispersibility in a coating material.
The coating composition of the present embodiment may further contain an antioxidant, a light stabilizer, or a polymerization inhibitor in addition to the above-mentioned polyisocyanate composition and the resin, so as to improve the storage stability of a coating material.

<<Coated substrate>>

A coated substrate of the present embodiment contains a coating of the above-mentioned coating composition. The coated substrate of the present embodiment preferably has a coating layer composed of a coating film formed by curing the above-mentioned coating composition.
The coated substrate of the present embodiment may contain a usual primer layer between a desired substrate and the coating layer.
Examples of the substrate include metals, woods, glasses, stones, ceramic materials, cement, hard and flexible plastics, textiles, leather products, and papers.

EXAMPLES

Although the present invention will be explained below by showing examples, the present invention is not limited to the following examples.
The measurement of physical properties and evaluation of polyisocyanate compositions in examples and comparative examples were conducted as described below. The terms "parts" and "%" mean "parts by mass" and "% by mass", respectively, unless otherwise specified.

<Measurement method of physical properties >

[Physical properties 1]

(Viscosity)

The viscosity was measured using an E-type viscometer (manufactured by Tokimec, Inc.) at 25°C. A standard

rotor (1° 34' × R24) was used. The rotation speed is described below.

(Rotation speed)

100 rpm (at less than 128 mPa·s)
50 rpm (at 128 mPa·s or more but less than 256 mPa•s)
20 rpm (at 256 mPa·s or more but less than 640 mPa•s)
10 rpm (at 640 mPa·s or more but less than 1280 mPa•s)
5 rpm (at 1280 mPa·s or more but less than 2560 mPa•s)
2.5 rpm (at 2560 mPa·s or more but less than 5120 mPa•s)

[Physical property 2]

(Amount of isocyanate groups)

The amount of isocyanate groups in each polyisocyanate composition obtained in each example or comparative example as each sample was determined by the method described in JIS K 7301-1995 (tolylene diisocyanate-type prepolymer test method for thermosetting urethane elastomer). The further specific measurement method of the amount of isocyanate groups is described below.

(1) 1 g of a sample (W g) was put in a 200 mL conical flask, followed by adding 20 ml of toluene thereto to dissolve the sample.
(2) Then, 20 mL of a 2.0 N di-n-butylamine•toluene solution was added to the flask, and then left still for 15 minutes.
(3) 70 mL of 2-propanol was added to the flask, and then dissolved therein to obtain a solution.
(4) The solution obtained in the step (3) mentioned above was titrated with a 1 mol/L hydrochloric acid to determine the sample titer (V1 mL).
(5) A blank titer (V0 mL) was determined by conducting the above-mentioned steps (1) to (4) except that no sample was used.

The amount of isocyanate groups (NCO%) was determined from the sample titer and the blank titer using the following formula.

$$[\text{Amount of isocyanate groups}]\ (\%\ \text{by mass}) = (V0-V1)\times 42/[W(1g)\times 1000]\times 100$$

[Physical property 3]

(Amount of non-volatile component)

In the case where each polyisocyanate composition obtained in each example or comparative example, used as a sample, was diluted with a solvent, the amount of non-volatile component was calculated by the following method. First, the mass (W0 g) of an aluminum cup was measured accurately, followed by putting approximately 1 g of a sample in the cup and then the mass of the resultant cup (W1 g) before conducting heating to dry was measured accurately. Then, the resultant cup in which the sample was placed was heated in a drier at 105°C for 3 hours. Then, the heated cup was cooled to room temperature, followed by measuring accurately the mass of the resultant cup (W2 g). Then, the mass ratio (% by mass) of the dried residue in the sample was calculated by the following formula as the amount of non-volatile component. In the case where the dilution with a solvent was not conducted, the amount of non-volatile component was considered to be substantially 100% by mass.

$$[\text{Non-volatile component}]\ (\%\ \text{by mass}) = (W2-W0)/(W1-W0)\times 100$$

<Evaluation method>

[Evaluation 1]

(Water-dispersibility of polyisocyanate composition)

The water-dispersibility of each polyisocyanate composition obtained in each example or comparative example as a sample was evaluated by the following method.

(1) The mass (W0 g) of a 100 mL flask and a Yoshino paper was weighed.
(2) The polyisocyanate composition was put in the 100 mL flask such that the solid amount thereof became 16 g (W2 g), followed by adding 24 g of deionized water thereto.
(3) The resultant solution in the 100 mL flask was stirred with a propeller blade at 200 rpm for 3 minutes, followed by filtering the resultant through the Yoshino paper weighed at the step (1).
(4) The resultant residue remaining on the Yoshino paper and the residue remaining in the 100 mL flask were brought together, and then heated in a drier at 105°C for 1 hour, to weigh the mass thereof (W1 g).
(5) The proportion of the polyisocyanate composition dispersed in water was determined using the following formula. In the formula, Y represents the amount (% by mass) of non-volatile component.

$$\text{The proporation (\% by mass) of the polyisocyanate composition dispersed in water} = [1 - (W2\ (g) - W0\ (g)) / (W2\ (16\ g) \times Y)] \times 100$$

(6) Then, the water-dispersibility was evaluated in accordance with the following evaluation criteria.

(Evaluation criteria)

◎: 95% by mass or more
◦: 90% by mass or more but less than 95% by mass
△: 80% by mass or more but less than 90% by mass
×: less than 80% by mass

[Preparation of coating composition]

40 g of an acrylic polyol aqueous dispersion (trade name: Setaqua 6510, hydroxyl value per resin: 138 mgKOH/g, manufactured by Allnex Ltd.) was put in a container. Then, each polyisocyanate composition obtained in each example or comparative example was added thereto such that the molar ratio (NCO/OH) of isocyanate groups in the polyisocyanate composition to hydroxyl groups in the acrylic polyol aqueous dispersion became 1.25. Then, deionized water was added to the resultant such that the solid amount in the resultant coating composition became 42% by mass, followed by stirring the resultant with a propeller blade at 600 rpm for 10 minutes to obtain each coating composition. The resultant coating composition was evaluated as mentioned below.

[Evaluation 2]

(Pot life)

Each coating composition obtained by the above-mentioned method was coated on a glass plate such that a coating film was formed until gelation to gain a film thickness of 40 μm per hour, followed by drying the resultant under an atmosphere at 23°C and 50% humidity, and then, the next day, the luster of the resultant coating film was measured. The time immediately after completion of preparation of the coating composition was defined as 0 hours, the degree of luster (20°) at the time of 0 hours was indicated as G0, the degree of luster after n hours was indicated as Gn, and the retention ratio of isocyanate groups, Gn / G0, was calculated to determine the time in which at least 80% of isocyanate groups was maintained as the time of pot life. The pot life was evaluated in accordance with the following evaluation criteria.

(Evaluation criteria)

○: 4 hours or more
△: 2 hours or more but less than 4 hours
×: less than 2 hours

[Evaluation 3]

(Pencil hardness of coating film)

Each coating composition obtained by the above-mentioned method was coated on a soft steel plate to form a coating film having a thickness of 40 μm. Then, the coating film was dried under an atmosphere at 23°C and 50% RH, and 7 days after, the pencil hardness of the resultant coating film was measured in accordance with the method defined in JIS K 5600-5-4. The hardness was increased in the following order. In the case where the pencil hardness was F or higher, the hardness was evaluated as favorable.

B<HB<F<H

[Evaluation 4]

(Water resistance of coating film)

Each coating composition obtained by the above-mentioned method was coated on a glass plate using an applicator such that the thickness thereof became 40 μm. Then, the resultant was dried under an atmosphere at 23°C and 50% RH for 7 days to obtain a coating film. Then, a silicon O-ring having a diameter of 20 mm was placed on the resultant coating film, and 0.5 g of water was poured therein. Then, the resultant was placed a 23°C for 12 hours, followed by removing water remaining on the surface thereof to observe the coating film. The water resistance of the coating film was evaluated in accordance with the following evaluation criteria. The term "blister" in the following evaluation criteria refers to the bleb or the swollenness generated on the surface of the coating film.

(Evaluation criteria)

○: There was no change.
△: White turbidity or blister was not generated.
×: Blister or white turbidity was generated, or coating film was dissolved.

[Evaluation 5]

(Ethanol resistance of coating film)

Each coating composition obtained by the above-mentioned method was coated on a glass plate to form a coating film having a thickness of 40 μm, followed by burning the resultant at 60°C for 30 minutes. Then, the resultant was cooled under an atmosphere at 23°C / 50% RH to obtain a coating film. On the next day, rubbing was conducted ten times using a cotton applicator impregnated with ethanol on the resultant coating film, to observe the coating film. The evaluation criteria are shown below.

(Evaluation criteria)

○: Transparent, and no depression was confirmed.
△: Slight depression or white turbidity was confirmed.
×: White turbidity or depression was confirmed.

<Synthesis of sulfonic acid amine salt>

[Synthesis example 1-1]

(Synthesis of HES / TBA)

10 parts by mass of 1-propanol was added to 20 parts by mass of an aqueous solution of 70% by mass 2-hydroxyethane sulfonic acid (hereinafter, may be abbreviated as "HES"), followed by stirring the mixture to obtain a solution. A tributylamine (hereinafter, may be abbreviated as "TBA") was weighed such that the molar equivalent ratio thereof to HES became 1, and diluted with the same mass of 1-propanol, followed by adding dropwise the resultant dilution to the solution while conducting stirring. 1 hour after the start of the dropwise addition, the stirring was stopped, followed by removing water and the solvent using an evaporator, to obtain a 2-hydroxyethanesulfonic acid tributylamine salt (hereinafter, may be abbreviated as "HES / TBA") in which the solid amount was 99.8% by mass.

[Synthesis example 1-2]

(Synthesis of HBS / DMCHA)

10 parts by mass of 1-propanol was added to 20 parts by mass of an aqueous solution of 85% by mass 4-hydroxybenzenesulfonic acid (hereinafter, may be abbreviated as "HBS"), followed by stirring the mixture to obtain a solution. A dimethylcyclohexylamine (hereinafter, may be abbreviated as "DMCHA") was weighed such that the molar equivalent ratio thereof to HBS became 1, and diluted with the same mass of 1-propanol, followed by adding dropwise the resultant dilution to the solution while conducting stirring. 1 hour after the start of the dropwise addition, the stirring was stopped, followed by removing water and the solvent using an evaporator, to obtain a 4-hydroxybenzenesulfonic acid dimethylcyclohexylamine salt (hereinafter, may be abbreviated as "HBS / DMCHA") in which the solid amount was 99.8% by mass.

[Synthesis example 1-3]

(Synthesis of 2-hydroxyethyl phosphate / TBA)

A 2-hydroxyethyl phosphate tributylamine salt (hereinafter, may be abbreviated as "2-hydroxyethyl phosphate / TBA") in which the solid amount was 99.6% by mass was obtained by the same method as that of synthesis example 1-1, except that 2-hydroxyethyl phosphate was used instead of HES and TBA was used such that the molar equivalent ratio thereof to 2-hydroxyethyl phosphate became 0.88.

[Synthesis example 2-1]

(Synthesis of polyisocyanate P-1)

1000 g of HDI and 4.0 g of isobutanol were charged into a four-necked flask equipped with a stirrer, a thermometer, a reflux cooling tube, a nitrogen inlet tube and a dropping funnel in a nitrogen atmosphere, and then the mixture was stirred while maintaining the temperature in the reactor at 70°C. Tetramethylammonium caprylate was added to the resultant, followed by adding phosphoric acid thereto to terminate the reaction when the yield became 25% by mass. Then, the reaction liquid was subjected to filtration, followed by removing unreacted HDI using a thin film evaporator to obtain a polyisocyanate P-1. The viscosity of the resultant polyisocyanate P-1 at 25°C was 1500 mPa·s, and the amount of isocyanate groups was 23.1% by mass.

[Synthesis example 2-2]

(Synthesis of polyisocyanate P-2)

A polyisocyanate P-2 was obtained in the same manner as that in Synthesis example 2-1, except that phosphoric acid was added to terminate the reaction when the yield became 50% by mass. The viscosity of the resultant polyisocyanate P-2 at 25°C was 2700 mPa·s, and the amount of isocyanate groups was 21.7% by mass.

[Synthesis example 2-3]

(Synthesis of polyisocyanate P-3)

1000 g of IPDI was charged into a four-necked flask equipped with a stirrer, a thermometer, a reflux cooling tube, a nitrogen inlet tube and a dropping funnel in a nitrogen atmosphere, and then stirred while maintaining the temperature in the reactor at 70°C. Tetramethylammonium caprylate was added to the reactor, followed by adding phosphoric acid thereto to terminate the reaction when the yield became 25% by mass. Then, the reaction liquid was subjected to filtration, followed by removing unreacted IPDI using a thin film evaporator, and then adding 25% by mass of propylene glycol monomethyl ether acetate (PMA) to obtain a polyisocyanate P-3. The viscosity of the resultant polyisocyanate P-3 at 25°C was 1800 mPa·s, and the amount of isocyanate groups was 12.1% by mass.

[Synthesis example 2-4]

(Synthesis of polyisocyanate P-4)

1000 g of HDI and 4.0 g of isobutanol were charged into a four-necked flask equipped with a stirrer, a thermometer, a reflux cooling tube, a nitrogen inlet tube and a dropping funnel in a nitrogen atmosphere, and then the mixture was stirred while maintaining the temperature in the reactor at 70°C. Tetramethylammonium caprylate was added to the resultant, followed by adding phosphoric acid thereto to terminate the reaction when the yield became 25% by mass. Then, the reaction liquid was subjected to filtration, followed by removing unreacted HDI using a thin film evaporator, and then mixing, in equal mass, the resultant polyisocyanate and a denaturation product of XDI modified with trimethylolpropane (manufactured by Mitsui Chemicals & Polyurethanes Inc., under the trade name of "TAKENATE D-110N", the amount of isocyanate groups: 11.5% by mass) to obtain a polyisocyanate P-4. The viscosity of the resultant polyisocyanate P-4 at 25°C was 900 mPa·s, and the amount of isocyanate groups was 17.3% by mass.

<Preparation of polyisocyanate composition>

[Example 1] Preparation of polyisocyanate composition PA-a1

6.8 parts by mass of 2-hydroxyethane sulfonic acid tributylamine salt (HES /TBA) obtained in the synthesis example 1-1 was added to 100 parts by mass of the polyisocyanate P-1 obtained in the synthesis example 2-1 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 5 parts by mass of 3-glycidoxypropyltriethoxysilane (manufactured by Shin-Etsu Chemical Co., Ltd., under the trade name of "KBE-403") was added to the resultant, followed by stirring the mixture sufficiently to obtain a polyisocyanate composition PA-a1.

[Example 2]

(Preparation of polyisocyanate composition PA-a2)

A polyisocyanate composition PA-a2 was prepared by the same method as that of Example 1, except that 15 parts by mass of KBE-403 was added instead of 5 parts by mass of KBE-403.

[Example 3]

(Preparation of polyisocyanate composition PA-a3)

A polyisocyanate composition PA-a3 was prepared by the same method as that of Example 1, except that 25 parts by mass of KBE-403 was added instead of 5 parts by mass of KBE-403.

[Example 4]

(Preparation of polyisocyanate composition PA-a4)

A polyisocyanate composition PA-a4 was prepared by the same method as that of Example 1, except that 35

parts by mass of KBE-403 was added instead of 5 parts by mass of KBE-403.

[Example 5]

(Preparation of polyisocyanate composition PA-a5)

A polyisocyanate composition PA-a5 was prepared by the same method as that of Example 1, except for the following processes. 6.4 parts by mass of 2-hydroxyethanesulfonic acid tributylamine salt (HES /TBA) obtained in the synthesis example 1-1 was added to 100 parts by mass of the polyisocyanate P-2 obtained in the synthesis example 2-2 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 10 parts by mass of 3-acryloxypropyltrimethoxysilane (manufactured by Shin-Etsu Chemical Co., Ltd., under the trade name of "KBM-5013") was added to the resultant.

[Example 6]

(Preparation of polyisocyanate composition PA-a6)

A polyisocyanate composition PA-a6 was prepared by the same method as that of Example 5, except that 20 parts by mass of KBM-5013 was added instead of 10 parts by mass of KBM-5013.

[Example 7]

(Preparation of polyisocyanate composition PA-a7)

A polyisocyanate composition PA-a7 was prepared by the same method as that of Example 5, except that 30 parts by mass of KBM-5013 was added instead of 10 parts by mass of KBM-5013.

[Example 8]

(Preparation of polyisocyanate composition PA-a8)

7.2 parts by mass of 4-hydroxybenzenesulfonic acid dimethylcyclohexylamine (HBS / DMCHA) obtained in the synthesis example 1-2 was added to 100 parts by mass of the polyisocyanate P-1 obtained in the synthesis example 2-1 such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 10 parts by mass of KBM-403 was added to the resultant, followed by stirring the mixture sufficiently to obtain a polyisocyanate composition PA-a8.

[Example 9]

(Preparation of polyisocyanate composition PA-a9)

A polyisocyanate composition PA-a9 was prepared by the same method as that of Example 8, except that 100 parts by mass of the polyisocyanate P-2 obtained in the synthesis example 2-2 was used instead of 100 parts by mass of the polyisocyanate P-1 and 5 parts by mass of methyltrimethoxysilane (manufactured by Shin-Etsu Chemical Co., Ltd., under the trade name of "KBM-13") was added instead of 10 parts by mass of KBE-403.

[Example 10]

(Preparation of polyisocyanate composition PA-a10)

A polyisocyanate composition PA-a10 was prepared by the same method as that of Example 9, except that 15 parts by mass of KBM-13 was added instead of 5 parts by mass of KBM-13.

[Example 11]

(Preparation of polyisocyanate composition PA-a11)

A polyisocyanate composition PA-a11 was prepared by the same method as that of Example 9, except that 25 parts by mass of KBM-13 was added instead of 5 parts by mass of KBM-13.

[Example 12] (for reference)

(Preparation of polyisocyanate composition PA-a12)

6.1 parts by mass of 3-cyclohexylaminopropanesulfonic acid (hereinafter, may be abbreviated as "CAPS") and 3.5 parts by mass of DMCHA were added to 100 parts by mass of the polyisocyanate P-1 obtained in the synthesis example 2-1 such that the molar ratio of isocyanate groups to amino groups (isocyanate group / amino group) became 20.0, followed by stirring the mixture under reflux in a nitrogen atmosphere at 100°C for 5 hours to allow the reaction to proceed. After the end of the reaction, the temperature was lowered to 50°C, and then 5 parts by mass of KBE-403 was added to the resultant, followed by stirring the mixture sufficiently to obtain a polyisocyanate composition PA-a12.

[Example 13] (for reference)

(Preparation of polyisocyanate composition PA-a13)

A polyisocyanate composition PA-a13 was prepared by the same method as that of Example 12, except that 15 parts by mass of KBE-403 was added instead of 5 parts by mass of KBE-403.

[Example 14] (for reference)

(Preparation of polyisocyanate composition PA-a14)

A polyisocyanate composition PA-a14 was prepared by the same method as that of Example 12, except that 30 parts by mass of KBE-403 was added instead of 5 parts by mass of KBE-403.

[Example 15] (for reference)

(Preparation of polyisocyanate composition PA-a15)

A polyisocyanate composition PA-a15 was prepared by the same method as that of Example 12, except that 40 parts by mass of KBE-403 was added instead of 5 parts by mass of KBE-403.

[Example 16] (for reference)

(Preparation of polyisocyanate composition P A-a 16)

8.2 parts by mass of polyethylene glycol monomethyl ether in which the average number of ethylene oxide repeating units was 4.2, (manufactured by NIPPON NYUKAZAI CO., LTD., under the trade name of "MPG"), was added to 100 parts by mass of the polyisocyanate P-2 obtained in the synthesis example 2-2 such that the molar equivalent ratio of isocyanate group / hydroxyl group became approximately 10, followed by stirring the mixture under a nitrogen at 100°C for 4 hours to allow the reaction to proceed. After the end of the reaction, the temperature was lowered to 50°C, and then 8 parts by mass of KBM-13 was added to the resultant, followed by stirring the mixture sufficiently to obtain a polyisocyanate composition PA-a16.

[Example 17] (for reference)

(Preparation of polyisocyanate composition PA-a17)

A polyisocyanate composition PA-a17 was prepared by the same method as that of Example 16, except that 15 parts by mass of KBM-13 was added instead of 8 parts by mass of KBM-13.

[Example 18] (for reference)

(Preparation of polyisocyanate composition P A-a 18)

A polyisocyanate composition PA-a18 was prepared by the same method as that of Example 16, except that 25 parts by mass of KBM-13 was added instead of 8 parts by mass of KBM-13.

[Example 19] (for reference)

(Preparation of polyisocyanate composition PA-a19)

A polyisocyanate composition PA-a19 was prepared by the same method as that of Example 16, except that 18 parts by mass of KBM-5013 was added instead of 8 parts by mass of KBM-13.

[Example 20]

(Preparation of polyisocyanate composition PA-a20)

A polyisocyanate composition PA-a20 was prepared by the same method as that of Example 1, except that 100 parts by mass of the polyisocyanate P-3 obtained in the synthesis example 2-3 was used instead of 100 parts by mass of the polyisocyanate P-1 obtained in the synthesis example 2-1, and 10 parts by mass of KBM-5013 was added instead of 5 parts by mass of KBE-403.

[Example 21]

(Preparation of polyisocyanate composition PA-a21)

A polyisocyanate composition PA-a21 was prepared by the same method as that of Example 1, except that 100 parts by mass of the polyisocyanate P-4 obtained in the synthesis example 2-4 was used instead of 100 parts by mass of the polyisocyanate P-1 obtained in the synthesis example 2-1, and 10 parts by mass of KBM-5013 was added instead of 5 parts by mass of KBE-403.

[Example 22]

(Preparation of polyisocyanate composition PA-a22)

6.8 parts by mass of 2-hydroxyethanesulfonic acid tributylamine salt (HES /TBA) obtained in the synthesis example 1-1 was added to 100 parts by mass of the polyisocyanate P-1 obtained in the synthesis example 2-1 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 10 parts by mass of tetraethoxysilane (manufactured by Shin-Etsu Chemical Co., Ltd., under the trade name of "KBE-04") was added to the resultant to obtain a polyisocyanate composition PA-a22.

[Example 23]

(Preparation of polyisocyanate composition PA-a23)

7.2 parts by mass of 4-hydroxybenzenesulfonic acid dimethylcyclohexylamine (HBS / DMCHA) obtained in the synthesis example 1-2 was added to 100 parts by mass of the polyisocyanate P-2 obtained in the synthesis example 2-2 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 15 parts by mass of tetraethylsilane (manufactured by Shin-Etsu Chemical Co., Ltd., under the trade name of "LS-2340") was added to the resultant to obtain a polyisocyanate composition PA-a23.

[Example 24] (for reference)

(Preparation of polyisocyanate composition PA-a24)

6.8 parts by mass of 2-hydroxyethyl phosphate tributylamine (2-hydroxyethyl phosphate / TBA) obtained in the synthesis example 1-3 was added to 100 parts by mass of the polyisocyanate P-1 obtained in the synthesis example 2-1 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 15 parts by mass of KBE-403 was added to the resultant to obtain a polyisocyanate composition PA-a24.

[Comparative example 1]

(Preparation of polyisocyanate composition PA-b1)

6.8 parts by mass of 2-hydroxyethanesulfonic acid tributylamine salt (HES /TBA) obtained in the synthesis example 1-1 was added to 100 parts by mass of the polyisocyanate P-1 obtained in the synthesis example 2-1 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed to obtain a polyisocyanate composition PA-b1.

[Comparative example 2]

(Preparation of polyisocyanate composition PA-b2)

7.2 parts by mass of 4-hydroxybenzenesulfonic acid dimethylcyclohexylamine (HBS / DMCHA) obtained in the synthesis example 1-2 was added to 100 parts by mass of the polyisocyanate P-2 obtained in the synthesis example 2-2 such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed to obtain a polyisocyanate composition PA-b2.

[Comparative example 3]

(Preparation of polyisocyanate composition PA-b3)

A polyisocyanate composition PA-b3 was obtained by heating the polyisocyanate composition PA-b1 obtained in the Comparative example 1 to 50°C, and then 60 parts by mass of KBE-403 was added thereto, followed by stirring the mixture sufficiently.

[Comparative example 4]

(Preparation of polyisocyanate composition PA-b4)

A polyisocyanate composition PA-b4 was obtained by heating the polyisocyanate composition PA-b2 obtained in the Comparative example 2 to 50°C, and then 75 parts by mass of KBM-5013 was added thereto, followed by stirring the mixture sufficiently.

[Comparative example 5]

(Preparation of polyisocyanate composition PA-b5)

A polyisocyanate composition PA-b5 was obtained by heating the polyisocyanate composition PA-b1 obtained in the Comparative example 1 to 50°C, and then 20 parts by mass of propylene glycol monomethyl ether acetate (PMA) was added thereto, followed by stirring the mixture sufficiently.

[Comparative example 6]

(Preparation of polyisocyanate composition PA-b6)

8.2 parts by mass of MPG was added to 100 parts by mass of the polyisocyanate P-2 obtained in the synthesis example 2-2 such that the molar equivalent ratio of isocyanate group / hydroxyl group became approximately 10, followed by stirring the mixture under a nitrogen at 100°C for 4 hours to allow the reaction to proceed. After the end of the reaction, a polyisocyanate composition PA-b6 was obtained.

[Comparative example 7]

(Preparation of polyisocyanate composition PA-b7)

A polyisocyanate composition PA-b7 was obtained by adding 15 parts by mass of KBE-403 to 100 parts by mass of the polyisocyanate P-2 obtained in the synthesis example 2-2, and then stirring the mixture sufficiently.

Physical properties of the polyisocyanate compositions obtained in the examples and comparative examples were measured by the above-mentioned methods. Results are shown in Tables 1 to 6. In addition, the polyisocyanate compositions obtained in the examples and comparative examples were evaluated by the above-mentioned methods. Results are shown in Tables 1 to 6.

Table 1

| | | Ex. 1 | Ex. 2 | Ex. 3 | Ex. 4 | Ex. 5 | Ex. 6 | Ex. 7 |
|---|---|---|---|---|---|---|---|---|
| Polyisocyanate composition | | PA-a1 | PA-a2 | PA-a3 | PA-a4 | PA-a5 | PA-a6 | PA-a7 |
| Constitution / Hydrophilic polyisocyanate compound / Polyisoyanate compound | Kind | P-1 | P-1 | P-1 | P-1 | P-2 | P-2 | P-2 |
| Constitution / Hydrophilic polyisocyanate compound / Polyisoyanate compound | Amount (parts by mass) | 100 | 100 | 100 | 100 | 100 | 100 | 100 |
| Constitution / Hydrophilic polyisocyanate compound / Hydrophilic compound / Sulfonic acid amine salt | Kind | HES / TBA | HES / TBA | HES / TBA | HES / TBA | HES / TBA | HES / TBA | HES / TBA |
| Constitution / Hydrophilic polyisocyanate compound / Hydrophilic compound / Sulfonic acid amine salt | Amount (parts by mass) | 6.8 | 6.8 | 6.8 | 6.8 | 6.4 | 6.4 | 6.4 |
| Constitution / Hydrophilic polyisocyanate compound / Hydrophilic compound / Sulfonic acid and amine compound | Kind | | | | | | | |
| Constitution / Hydrophilic polyisocyanate compound / Hydrophilic compound / Sulfonic acid and amine compound | Amount (parts by mass) | | | | | | | |
| Constitution / Hydrophilic polyisocyanate compound / Hydrophilic compound / Nonionic compound | Kind | | | | | | | |
| Constitution / Hydrophilic polyisocyanate compound / Hydrophilic compound / Nonionic compound | Amount (parts by mass) | | | | | | | |
| Constitution / Silicon-containing compound (parts by mass) | KBE-403 | 5 | 15 | 25 | 35 | | | |
| Constitution / Silicon-containing compound (parts by mass) | KBM-5103 | | | | | 10 | 20 | 30 |
| Constitution / Silicon-containing compound (parts by mass) | KBM-13 | | | | | | | |
| Constitution / Silicon-containing compound (parts by mass) | KBE-04 | | | | | | | |
| Constitution / Silicon-containing compound (parts by mass) | LS-2340 | | | | | | | |
| Constitution / Solvent | PMA | | | | | | | |
| Physical properties / Amount of NCO groups | (% by mass) | 18.6 | 17.0 | 15.7 | 14.6 | 16.7 | 15.4 | 14.2 |
| Physical properties / Amount of non-volatile component | (% by mass) | 99.0 | 99.0 | 98.6 | 98.3 | 98.8 | 98.5 | 98.3 |
| Evaluation / Water dispersibility | | ○ | ○ | ◎ | ◎ | ○ | ◎ | ◎ |
| Evaluation / Pot life | | ○ | ○ | ○ | ○ | ○ | ○ | ○ |
| Evaluation / Hardness of coating film | | F | H | H | F | H | H | F |
| Evaluation / Water resistance of coating film | | △ | △ | △ | △ | ○ | ○ | ○ |
| Evaluation / Ethanol resistance of coating film | | ○ | ○ | ○ | ○ | ○ | ○ | ○ |

(Ex.: Example)

Table 2

| | | | | | Ex. 8 | Ex. 9 | Ex. 10 | Ex. 11 |
|---|---|---|---|---|---|---|---|---|
| Polyisocyanate composition | | | | | PA-a8 | PA-a9 | PA-a10 | PA-a11 |
| Constitution | Hydrophilic polyisocyanate compound | Polyisoyanate compound | | Kind | P-1 | P-2 | P-2 | P-2 |
| | | | | Amount (parts by mass) | 100 | 100 | 100 | 100 |
| | | Hydrophilic compound | Sulfonic acid amine salt | Kind | HBS /DMCHA | HBS /DMCHA | HBS /DMCHA | HBS /DMCHA |
| | | | | Amount (parts by mass) | 7.2 | 7.2 | 7.2 | 7.2 |
| | | | Sulfonic acid and amine compound | Kind | | | | |
| | | | | Amount (parts by mass) | | | | |
| | | | Nonionic compound | Kind | | | | |
| | | | | Amount (parts by mass) | | | | |
| | Silicon-containing compound (parts by mass) | | | KBE-403 | 10 | | | |
| | | | | KBM-5103 | | | | |
| | | | | KBM-13 | | 5 | 15 | 25 |
| | | | | KBE-04 | | | | |
| | | | | LS-2340 | | | | |
| | Solvent | | | PMA | | | | |
| Physical properties | Amount of NCO groups | | | (% by mass) | 16.4 | 15.7 | 14.5 | 14.5 |
| | Amount of non-volatile component | | | (% by mass) | 98.8 | 98.5 | 98.3 | 98.3 |
| Evaluation | Water dispersibility | | | | ◎ | ◎ | ◎ | ◎ |
| | Pot life | | | | ○ | ○ | ○ | ○ |
| | Hardness of coating film | | | | H | F | F | F |
| | Water resistance of coating film | | | | ○ | ○ | ○ | ○ |
| | Ethanol resistance of coating film | | | | ○ | ○ | ○ | ○ |

(Ex.: Example)

Table 3

| | | | | | Ex. 12* | Ex. 13* | Ex. 14* | Ex. 15* |
|---|---|---|---|---|---|---|---|---|
| Polyisocyanate composition | | | | | PA-a12 | PA-a13 | PA-a14 | PA-a15 |
| Constitution | Hydrophilic polyisocyanate compound | Polyisoyanate compound | | Kind | P-1 | P-1 | P-1 | P-1 |
| | | | | Amount (parts by mass) | 100 | 100 | 100 | 100 |
| | | Hydrophilic compound | Sulfonic acid amine salt | Kind | | | | |
| | | | | Amount (parts by mass) | | | | |
| | | | Sulfonic acid and amine compound | Kind | CAPS /DMCHA | CAPS /DMCHA | CAPS /DMCHA | CAPS /DMCHA |
| | | | | Amount (parts by mass) | 6.1/3.5 | 6.1/3.5 | 6.1/3.5 | 6.1/3.5 |
| | | | Nonionic compound | Kind | | | | |
| | | | | Amount (parts by mass) | | | | |
| | Silicon-containing compound (parts by mass) | | | KBE-403 | 5 | 15 | 30 | 40 |
| | | | | KBM-5103 | | | | |
| | | | | KBM-13 | | | | |
| | | | | KBE-04 | | | | |
| | | | | LS-2340 | | | | |
| | Solvent | | | PMA | | | | |
| Physical properties | Amount of NCO groups | | | (% by mass) | 17.5 | 16.1 | 14.3 | 13.4 |
| | Amount of non-volatile component | | | (% by mass) | 99.2 | 99.0 | 98.7 | 98.4 |
| Evaluation | Water dispersibility | | | | ○ | ◎ | ◎ | ◎ |
| | Pot life | | | | ○ | ○ | ○ | ○ |
| | Hardness of coating film | | | | H | H | F | F |
| | Water resistance of coating film | | | | △ | △ | △ | △ |
| | Ethanol resistance of coating film | | | | ○ | ○ | ○ | ○ |

(Ex.: Example)

* for reference

Table 4

| | | | | | Ex. 16* | Ex. 17* | Ex. 18* | Ex. 19* |
|---|---|---|---|---|---|---|---|---|
| Polyisocyanate composition | | | | | PA-a16 | PA-a17 | PA-a18 | PA-a19 |
| Constitution | Hydrophilic polyisocyanate compound | Polyisoyanate compound | | Kind | P-2 | P-2 | P-2 | P-2 |
| | | | | Amount (parts by mass) | 100 | 100 | 100 | 100 |
| | | Hydrophilic compound | Sulfonic acid amine salt | Kind | | | | |
| | | | | Amount (parts by mass) | | | | |
| | | | Sulfonic acid and amine compound | Kind | | | | |
| | | | | Amount (parts by mass) | | | | |
| | | | Nonionic compound | Kind | MPG | MPG | MPG | MPG |
| | | | | Amount (parts by mass) | 8.2 | 8.2 | 8.2 | 8.2 |
| | Silicon-containing compound (parts by mass) | | | KBE-403 | | | | |
| | | | | KBM-5103 | | | | 18 |
| | | | | KBM-13 | 8 | 15 | 25 | |
| | | | | KBE-04 | | | | |
| | | | | LS-2340 | | | | |
| | Solvent | | | PMA | | | | |
| Physical properties | Amount of NCO groups | | | (% by mass) | 15.5 | 14.3 | 13.3 | 14.3 |
| | Amount of non-volatile component | | | (% by mass) | 99.0 | 98.5 | 98.5 | 98.6 |
| Evaluation | Water dispersibility | | | | ○ | ◎ | ◎ | ○ |
| | Pot life | | | | ○ | ○ | ○ | ○ |
| | Hardness of coating film | | | | F | F | F | F |
| | Water resistance of coating film | | | | △ | △ | △ | △ |
| | Ethanol resistance of coating film | | | | △ | △ | △ | △ |

(Ex.: Example)

* for reference

Table 5

| | | | | | Ex. 20 | Ex. 21 | Ex. 22 | Ex. 23 | Ex. 24* |
|---|---|---|---|---|---|---|---|---|---|
| Polyisocyanate composition | | | | | PA-a20 | PA-a21 | PA-a22 | PA-a23 | PA-a24 |
| Constitution | Hydrophilic polyisocyanate compound | Polyisoyanate compound | | Kind | P-3 | P-4 | P-1 | P-2 | P-1 |
| | | | | Amount (parts by mass) | 100 | 100 | 100 | 100 | 100 |
| | | Hydrophilic compound | Sulfonic acid amine salt | Kind | HES / TBA | HES / TBA | HES / TBA | HBS / DMCHA | 2-Hydroxyethyl phosphate /TBA |
| | | | | Amount (parts by mass) | 6.8 | 6.8 | 6.8 | 7.2 | 6.8 |
| | | | Sulfonic acid and amine compound | Kind | | | | | |
| | | | | Amount (parts by mass) | | | | | |
| | | | Nonionic compound | Kind | | | | | |
| | | | | Amount (parts by mass) | | | | | |
| | Silicon-containing compound (parts by mass) | | | KBE-403 | | | | | 15 |
| | | | | KBM-5103 | 10 | 10 | | | |
| | | | | KBM-13 | | | | | |
| | | | | KBE-04 | | | 10 | | |
| | | | | LS-2340 | | | | 15 | |
| | Solvent | | | PMA | | | | | |
| Physical properties | Amount of NCO groups | | | (% by mass) | 9.9 | 13.7 | 17.8 | 16.3 | 16.0 |
| | Amount of non-volatile component | | | (% by mass) | 75.1 | 87.6 | 99.2 | 99.0 | 99.1 |
| Evaluation | Water dispersibility | | | | ◎ | ○ | △ | △ | △ |
| | Pot life | | | | ◎ | △ | △ | △ | △ |
| | Hardness of coating film | | | | H | H | HB | HB | HB |
| | Water resistance of coating film | | | | ○ | ○ | △ | △ | △ |
| | Ethanol resistance of coating film | | | | ○ | ○ | △ | △ | △ |

(Ex.: Example)

* for reference

Table 6

| | | | | | C. Ex. 1 | C. Ex. 2 | C. Ex. 3 | C. Ex. 4 | C. Ex. 5 | C. Ex. 6 | C. Ex. 7 |
|---|---|---|---|---|---|---|---|---|---|---|---|
| Polyisocyanate composition | | | | | PA-b1 | PA-b2 | PA-b3 | PA-b4 | PA-b5 | PA-b6 | PA-b7 |
| Constitution | Hydrophilic polyisocyanate compound | Polyisoyanate compound | | Kind | P-1 | P-2 | P-1 | P-2 | P-1 | P-2 | P-2 |
| | | | | Amount (parts by mass) | 100 | 100 | 100 | 100 | 100 | 100 | 100 |
| | | Hydrophilic compound | Sulfonic acid amine salt | Kind | HES/TBA | HBS/DMCHA | HES/TBA | HBS/DMCHA | HES/TBA | | |
| | | | | Amount (parts by mass) | 6.8 | 7.2 | 6.8 | 7.2 | 6.8 | | |
| | | | Sulfonic acid and amine compound | Kind | | | | | | | |
| | | | | Amount (parts by mass) | | | | | | | |
| | | | Nonionic compound | Kind | | | | | | MPG | |
| | | | | Amount (parts by mass) | | | | | | 8.2 | |
| | Silicon-containing compound (parts by mass) | | | KBE-403 | | | 60 | | | | 15 |
| | | | | KBM-5103 | | | | 75 | | | |
| | | | | KBM-13 | | | | | | | |
| | | | | KBE-04 | | | | | | | |
| | | | | LS-2340 | | | | | | | |
| | Solvent | | | PMA | | | | | 20 | | |
| Physical properties | Amount of NCO groups | | | (% by mass) | 19.4 | 18.1 | 12.4 | 11.0 | 18.5 | 17.3 | 18.4 |
| | Amount of non-volatile component | | | (% by mass) | 99.2 | 99 | 98.8 | 98.5 | 98.5 | 99.2 | 99.0 |
| Evaluation | Water dispersibility | | | | × | × | ○ | ○ | △ | × | × |
| | Pot life | | | | △ | △ | △ | △ | △ | △ | × |
| | Hardness of coating film | | | | HB | HB | B | B | HB | B | HB |
| | Water resistance of coating film | | | | × | × | × | × | × | × | △ |
| | Ethanol resistance of coating film | | | | × | × | × | × | × | × | △ |

(C.Ex.: Comparative example)

The polyisocyanate compositions PA-a1 to PA-a23 (Examples 1 to 23), each containing both the hydrophilic polyisocyanate compound and the silicon-containing compound exhibited excellent water-dispersibility, excellent pot life

when made into a coating composition, and excellent hardness, water resistance and ethanol resistance when made into a coating film, as shown in Tables 1 to 5.

In addition, it was confirmed from the comparison of the polyisocyanate compositions PA-a1 to PA-a4 (Examples 1 to 4), the comparison of the polyisocyanate compositions PA-a5 to PA-a7 (Examples 5 to 7), the comparison of polyisocyanate compositions PA-a9 to PA-a11 (Examples 9 to 11), the comparison of polyisocyanate compositions PA-a12 to PA-a15 (Examples 12 to 15, for reference), and the comparison of polyisocyanate compositions PA-a16 to PA-a18 (Examples 16 to 18, for reference), in which the amounts of the silicon-containing compound are different from each other, that the water-dispersibility tended to be further improved when the amount of the silicon-containing compound, relative to 100 parts by mass of the polyisocyanate compound, was 15 parts by mass or more.

In addition, it was confirmed from the comparison of the polyisocyanate compositions PA-a5 and PA-a22 (Examples 5 and 22) and the comparison of the polyisocyanate compositions PA-a10 and PA-a23 (Examples 10 and 23), in which the kinds of the silicon-containing compound are different from each other, that the polyisocyanate compositions PA-a5 and PA-a10, in which the silicon-containing compound having a particular structure (the above-mentioned compound of the following general formula (I)) was contained, exhibited excellent water-dispersibility, excellent pot life when made into a coating composition, and excellent hardness, water resistance and ethanol resistance when made into a coating film.

It was confirmed from the comparison of the polyisocyanate compositions PA-a5, PA-a20 and PA-a21 (Examples 5, 20 and 21), in which the kinds of the polyisocyanate compound are different from each other, that the polyisocyanate composition PA-a5 containing the polyisocyanate compound derived from the aliphatic diisocyanate tended to exhibit excellent pot life when made into a coating composition, and the polyisocyanate composition PA-a20 containing the polyisocyanate compound derived from the alicyclic diisocyanate tended to exhibit particularly favorable water-dispersibility and pot life when made into a coating composition.

It was confirmed from the comparison of the polyisocyanate compositions PA-a10 and PA-a17 (Examples 10 and 17), and the comparison of the polyisocyanate compositions PA-a11 and PA-a18 (Examples 11 and 18), in which the kinds of the hydrophilic compound are different from each other, that the polyisocyanate compositions PA-a10 and PA-a11 containing the sulfonic acid amine salt tended to exhibit further favorable water resistance and ethanol resistance when made into a coating film.

In contrast, the polyisocyanate compositions PA-b1, PA-b2, and PA-b6 (Comparative examples 1, 2, and 6) free from any silicon-containing compounds exhibited an approximately acceptable pot life when made into a coating composition, but exhibited unfavorable water-dispersibility and unfavorable water resistance and ethanol resistance when made into a coating film, and the polyisocyanate composition PA-b6 (Comparative example 6) exhibited unfavorable hardness when made into a coating film, as shown in Table 6.

The polyisocyanate compositions PA-b3 and PA-b4 (Comparative examples 3 and 4) in which the amount of the silicon-containing compound, relative to 100 parts by mass of the polyisocyanate compound, exceeded 50 parts by mass exhibited favorable water-dispersibility and an acceptable pot life when made into a coating composition, but exhibited unfavorable hardness, water resistance and ethanol resistance when made into a coating film.

The polyisocyanate composition PA-b5 (Comparative Example 5) in which PMA was added as a solvent instead of the silicon-containing compound exhibited acceptable water-dispersibility, pot life when made into a coating composition, and hardness when made into a coating film, but exhibited unfavorable water resistance and ethanol resistance when made into a coating film.

The polyisocyanate composition PA-b7 (Comparative example 7) in which a normal polyisocyanate compound was contained instead of a hydrophilic polyisocyanate compound in which a hydrophilic compound was introduced exhibited acceptable water resistance and ethanol resistance when made into a coating film, but exhibited unfavorable water-dispersibility, pot life when made into a coating composition, and hardness when made into a coating film.

## INDUSTRIAL APPLICABILITY

The polyisocyanate composition of the present embodiment exhibits excellent dispersibility when dispersed in water or a main agent containing water, excellent pot life when made into a coating composition, and excellent hardness, water resistance and solvent-resistance when made into a coating film. The coating composition of the present embodiment contains the polyisocyanate composition, and may be preferably used as an architectural coating material, an automotive coating material, an automotive refinishing coating material, a coating material to be applied on plastics, a tackifier, an adhesive, a building material, a household aqueous coating material, another coating agent, a sealing agent, an ink, a casting material, an elastomer, a foam, a plastics raw material, or a fiber treatment agent.

## Claims

1. A polyisocyanate composition, comprising:

   a hydrophilic polyisocyanate compound (A) obtained by reacting a polyisocyanate compound derived from at least one diisocyanate selected from the group consisting of aliphatic diisocyanates, alicyclic diisocyanates and aromatic diisocyanates, and a hydrophilic compound; and
   a silicon-containing compound (B),
   wherein an amount of the silicon-containing compound (B), relative to 100 parts by mass of the polyisocyanate compound, is 1 part by mass to 50 parts by mass,
   the hydrophilic compound is either a hydroxyl group-containing sulfonic acid or an amine salt thereof, and
   the hydrophilic polyisocyanate compound (A) is obtained by reacting the polyisocyanate compound and the hydrophilic compound in such a blend ratio that a molar ratio, isocyanate group/hydroxyl goup, of 10 to 100 is satisfied.

2. The polyisocyanate composition according to claim 1, wherein the silicon-containing compound (B) is a compound of a general formula (I):

   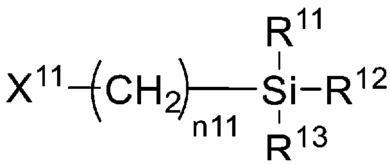

   ( I )

   in the general formula (I), $X^{11}$ represents an alkyl group, a vinyl group, an epoxy group, a styryl group, a methacrylate group, an acrylate group, an isocyanurate group, a haloalkyl group or a mercapto group, $R^{11}$, $R^{12}$ and $R^{13}$ each independently represents a hydrogen atom, an alkoxy group or an alkyl group, at least two selected from the group consisting of $R^{11}$, $R^{12}$ and $R^{13}$ may bind together to form a ring, the ring is an aromatic ring, or a C5 or C6 cycloalkyl group, at least one selected from the group consisting of $R^{11}$, $R^{12}$ and $R^{13}$ is an alkoxy group, and n11 is an integer of 0 to 10.

3. The polyisocyanate composition according to claim 1 or 2, wherein an amount of the silicon-containing compound, relative to 100 parts by mass of the polyisocyanate compound, is 2 parts by mass to 50 parts by mass.

4. The polyisocyanate composition according to any one of claims 1 to 3, wherein the polyisocyanate composition is used as a curing agent of an aqueous two-liquid type polyurethane composition.

5. A coating composition comprising a polyisocyanate composition of any one of claims 1 to 4.

6. A coated substrate comprising a coating of a coating composition of claim 5.

## Patentansprüche

1. Polyisocyanatzusammensetzung, umfassend:

   eine hydrophile Polyisocyanatverbindung (A), welche durch Umsetzen einer Polyisocyanatverbindung, die von mindestens einem Diisocyanat, ausgewählt aus der Gruppe bestehend aus aliphatischen Diisocyanaten, alicyclischen Diisocyanaten und aromatischen Diisocyanaten, abgeleitet ist, und einer hydrophilen Verbindung erhalten wurde; und
   eine Silicium-enthaltende Verbindung (B),
   wobei die Menge der Silicium-enthaltenden Verbindung (B), bezogen auf 100 Massenteile der Polyisocyanatverbindung, 1 Massenteil bis 50 Massenteile ist,
   die hydrophile Verbindung eine hydroxylgruppenhaltige Sulfonsäure oder ein Aminsalz davon ist, und
   die hydrophile Polyisocyanatverbindung (A) durch Umsetzen der Polyisocyanatverbindung und der hydrophilen Verbindung in einem solchen Mischungsverhältnis erhalten wurde, dass ein Molverhältnis Isocyanatgruppe/Hydroxylgruppe, von 10 zu 100 erfüllt ist.

2. Polyisocyanatzusammensetzung nach Anspruch 1, wobei die Silicium-enthaltende Verbindung (B) eine Verbindung der allgemeinen Formel (I) ist:

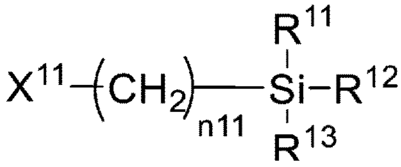

(I)

wobei in der allgemeinen Formel (I) $X^{11}$ eine Alkylgruppe, eine Vinylgruppe, eine Epoxygruppe, eine Styrylgruppe, eine Methacrylatgruppe, eine Acrylatgruppe, eine Isocyanuratgruppe, eine Halogenalkylgruppe oder eine Mercaptogruppe darstellt, $R^{11}$, $R^{12}$ und $R^{13}$ jeweils unabhängig ein Wasserstoffatom, eine Alkoxygruppe oder eine Alkylgruppe darstellen, mindestens zwei, ausgewählt aus der Gruppe bestehend aus $R^{11}$, $R^{12}$ und $R^{13}$, miteinander unter Ringbildung verbunden sein können, wobei der Ring ein aromatischer Ring oder eine C5- oder C6-Cycloalkylgruppe ist, mindestens eine aus der Gruppe bestehend aus $R^{11}$, $R^{12}$ und $R^{13}$ eine Alkoxygruppe ist, und n11 eine ganze Zahl von 0 bis 10 ist.

3. Polyisocyanatzusammensetzung nach Anspruch 1 oder 2, wobei die Menge der Silicium-enthaltenden Verbindung, bezogen auf 100 Massenteile der Polyisocyanatverbindung, 2 Massenteile bis 50 Massenteile ist.

4. Polyisocyanatzusammensetzung nach einem der Ansprüche 1 bis 3, wobei die Polyisocyanatzusammensetzung als Härtungsmittel einer wässrigen Polyurethanzusammensetzung vom Typ zwei Flüssigkeiten verwendet wird.

5. Beschichtungszusammensetzung, die eine Polyisocyanatzusammensetzung nach einem der Ansprüche 1 bis 4 enthält.

6. Beschichtetes Substrat, welches eine Beschichtung einer Beschichtungszusammensetzung nach Anspruch 5 aufweist.

## Revendications

1. Composition de polyisocyanate, comprenant :

un composé polyisocyanate hydrophile (A) obtenu par réaction d'un composé polyisocyanate dérivé d'au moins un diisocyanate choisi dans le groupe constitué de diisocyanates aliphatiques, de diisocyanates alicycliques et de diisocyanates aromatiques, et d'un composé hydrophile ; et
un composé contenant du silicium (B),
dans laquelle une quantité du composé contenant du silicium (B), par rapport à 100 parties en masse du composé polyisocyanate, est de 1 partie en masse à 50 parties en masse,
le composé hydrophile est soit un acide sulfonique contenant un groupe hydroxyle soit un sel aminé de celui-ci, et le composé polyisocyanate hydrophile (A) est obtenu par réaction du composé polyisocyanate et du composé hydrophile en un rapport de mélange tel qu'un rapport molaire, groupe isocyanate/groupe hydroxyle, de 10 à 100 est satisfait.

2. Composition de polyisocyanate selon la revendication 1, dans laquelle le composé contenant du silicium (B) est un composé de formule générale (1) :

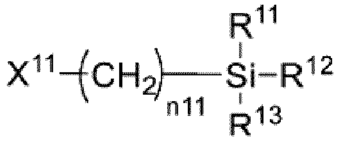

(I)

dans la formule générale (I), $X^{11}$ représente un groupe alkyle, un groupe vinyle, un groupe époxy, un groupe styryle, un groupe méthacrylate, un groupe acrylate, un groupe isocyanurate, un groupe halogénoalkyle ou un groupe mercapto group, $R^{11}$, $R^{12}$ et $R^{13}$ représentent chacun indépendamment un atome d'hydrogène, un groupe alcoxy

ou un groupe alkyle, au moins deux choisis dans le groupe constitué de $R^{11}$, $R^{12}$ et $R^{13}$ peuvent se lier ensemble pour former un noyau, le noyau est un noyau aromatique, ou un groupe cycloalkyle en C5 ou en C6, au moins un choisi dans le groupe constitué de $R^{11}$, $R^{12}$ et $R^{13}$ est un groupe alcoxy, et n11 est un nombre entier de 0 à 10.

**3.** Composition de polyisocyanate selon la revendication 1 ou 2, dans laquelle une quantité du composé contenant du silicium, par rapport à 100 parties en masse du composé polyisocyanate, est de 2 parties en masse à 50 parties en masse.

**4.** Composition de polyisocyanate selon l'une quelconque des revendications 1 à 3, dans laquelle la composition de polyisocyanate est utilisée en tant qu'agent de durcissement d'une composition aqueuse de polyuréthane de type à deux liquides.

**5.** Composition de revêtement comprenant une composition de polyisocyanate selon l'une quelconque des revendications 1 à 4.

**6.** Substrat revêtu comprenant un revêtement d'une composition de revêtement selon la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI5222150 A
- JP HEI9328654 A
- JP 2000198920 A
- JP 2005263839 A
- JP 5557975 B
- US 2003138642 A1
- EP 0953585 A1
- WO 2019121387 A1
- WO 2016101093 A1
- WO 2017185332 A1
- WO 2015051526 A1
- WO 2010112605 A1
- WO 2017082363 A1
- US 2019092946 A1
- WO 2020226962 A1